# EUROPEAN PATENT APPLICATION

(11) **EP 1 589 757 A1**
(43) Date of publication of application: **26.10.2005**
(21) Application number: 04007103.7
(22) Date of filing: 24.03.2004
(51) Int. Cl.: H04N 7/08, H04N 7/14

(54) **Teletext for video telephony: system, method and apparatus**

(71) Applicant: SIEMENS AKTIENGESELLSCHAFT, 80333 München (DE)
(72) Inventor: Aspasia, Antoniou, 14231, Nea Ionia Attikis-Athens (GR)

(57) **Abstract**

Teletext for video telephony between subscribers conferencing over a telecommunications network is provided. A Gatekeeper controls communications of the telecommunications network. A video encoder/decoder encodes and decodes audio/video signals to provide video telephony to at least one subscriber. A video text server provides teletext signals representing teletext to be established in the video telephony conference. The video encoder/decoder originates a SETUP message to the Gatekeeper. The Gatekeeper includes address translation rule that causes the Gatekeeper to redirect the SETUP message to the video text server. The videotext server sends a Release Complete message to the Gatekeeper. The teletext signals representing the teletext are rerouted from the video text server to the Gatekeeper.

## Description

### BACKGROUND

### Field Of The Invention.

The purpose of this patent is to introduce the service "Teletext", as a new one on the Videotelephony IP solution, as well as to introduce the interworking between the features "Teletext", "SMS" and "EMAIL".

### Related Information.

Video telephony is full-duplex, real-time audio-visual communication between or among end users. Historically, video telephony has not been successfully embraced by the end user. One reason is because of the relatively poorer resolution of video telephony transmissions in comparison to what users have become accustomed to on television. One reason for this is due to the fact that full-motion, high-resolution video data requires far more bandwidth than audio data. This is true whether the signals are analog or digital. One manner in which this was dealt with was that the bandwidth of a video signal was minimized by using the lowest image resolution. But this provided only acceptable results. Also, attempts at settling the grayscale rather than color imagery, and transmitting non-moving images at intervals of several seconds rather than a continuous, full-motion image, have also been tried out. A video signal of this type, which is a form of slow-scan television (SSTV), can be transmitted and received over ordinary copper telephone lines.

In recent years, broadband Internet solutions such as DSL (Digital Subscriber Line), cable, and land-based wireless have made it possible to transmit and receive video data at higher resolutions and more rapid refresh rates than is the case with the ordinary telephone system. Broadband satellite solutions can also work, although the latency inherent in geostationary-satellite systems produces an image and voice delay that is objectionable to some users. Even with the best broadband technology available to consumers today, the image quality is modest, resembling the picture on a small fast-scan television (FSTV) receiver.

The technology for SSTV video telephony has been widely available for years, but videophones are not in widespread use. One reason may be the cost of the hardware, which requires a display screen and a video camera. A third reason is the generally low image quality and slow refresh rate. As high-speed Internet access becomes more widely available, fast-scan television (FSTV) or high-definition television (HDTV) video telephony is likely to become more attractive for potential home and business users.

Nonetheless, the market data indicates that telephone users would gladly use video telephony if given the opportunity. In recent years, users have switched from broadcast to cable and satellite useage. With these developments, the users have adopted the set top box into their living rooms. Since most set top boxes include the technology for basic video telephony, the rudimentary capability is no longer a barrier necessarily to the user. Moreover, high speed internet access and digital T.V. has boosted refresh rates and bandwidth, making video telephony a practical reality for the user.

Despite these advancements, video telephony remains relatively uninteresting for the consumer market. What is needed therefore is additional functionality which will reinvigorate consumer interest and excitement in this valuable and yet-untapped market.

One way in which to do this would be to convert video telephony into a multi-media content provider. It would be very interesting for the user if video telephony were able to, for example, provide new services that allow the end-users to inform themselves about several topics, such as news, sport, financial information, entertainment listings, holiday adverts, cinema, music and TV reviews, back-up information for certain TV programs, and themed magazines (e.g. for kids). This could be done perhaps with teletext technology. It would also be extremely attractive to mate the video telephony with, not only to teletext, but also to short message servicing (SMS) and EMAIL. For example, these services could be used to enable the served users to be notified about which Teletext topics they might be interested in, via a daily/weekly/monthly SMS or EMAIL.

Up to now no "Teletext" service or a similar one has been implemented for the Videotelephony IP solution. One reason is perhaps that no hardware or software solution has been developed to bring teletext to video telephony. For one thing, the Videotelephony device and the switching network to which the device is connected would need to be modified in order to communicate with a Teletext server, an SMS server (mobile network) and a mail server, respectively. Additionally, an interface with the video telephony device would have to be adapted to cover the new functionality that will be provided. Until this time, no device or process exists to provide teletext to video telephony.

### OBJECTS & SUMMARY OF THE INVENTION

An object of the invention is to provide a new service which will allow the end-users to inform themselves about several topics, such as news, sport, financial information, entertainment listings, holiday adverts, cinema, music and TV reviews, back-up information for certain TV programs, and themed magazines.

Another object of the invention is to provide the interworking of the features "Teletext", "SMS" and "EMAIL"

Another object of the invention is to enable the served users to notify themselves about the Teletext topics they are interested in, via a daily/weekly/monthly SMS or EMAIL.

Another object of the invention is to enhance video telephony with a new service (Teletext) and its add on features (SMS, EMAIL) to promote sales a more complete solution to video telephony.

Another object of the invention is to provide the first combination of Teletext, SMS and EMAIL services as no such implementation has yet to be released, worldwide or otherwise.

Another object of the invention is to provide the opportunity to the operator, to approach his customers more efficiently.

Another object of the invention is to provide flexible handling of the newly introduced SMS and EMAIL enhancements.

Another object of the invention is to provide a user friendly device and graphical interface.

Another object of the invention is to provide a modified Teletext menu, as well as the SMS and the EMAIL enhancements, that facilitate the end-user to make his/her further steps.

A system. method and apparatus for teletext over video telephony between subscribers conferencing over a telecommunications network is provided. A Gatekeeper controls communications of the telecommunications network. A video encoder/decoder encodes and decodes audio/video signals to provide video telephony to at least one subscriber. A video text server provides teletext signals representing teletext to be established in the video telephony conference. The video encoder/decoder originates a SETUP message to the Gatekeeper. The Gatekeeper includes address translation rule that causes the Gatekeeper to redirect the SETUP message to the video text server. The videotext server sends a Release Complete message to the Gatekeeper. The teletext signals representing the teletext are rerouted from the video text server to the Gatekeeper.

The present invention shall, for first time, introduce a teletext feature as far as the Videotelephony IP solution is concerned. Another significant point is that the proposed Teletext enhancements (SMS/EMAIL) will allow the end-users to handle efficiently the provided service. Such enhancements were never implemented up to now.

In addition the invention provides, as a new "Teletext" service, for the IP based solution "Videotelephony". No such service has not been implemented up to now. This will allow the Videotelephony end-users to inform themselves about several topics, such as news, sport, financial information, entertainment listings, holiday adverts, cinema, music and TV reviews, back-up information for certain TV programs, and themed magazines.

To that end, the invention further provides modification to the Teletext menu, which will have three additional options. The first one will enable the served user to choose if he/she wants to receive the information, he/she is interested in, via SMS or EMAIL. The second option, which stems out of the first, allows the subscriber to specify how often he/she wants to receive the updated information of the topic he chose on the previous step. The third option allows the subscriber to indicate the email address or the mobile phone number where he/she wants to be reached.

The proposal concerning the SMS may sound similar to services offered by mobile phone service providers. However, the mobile telephony solution only provides notification that information is received. The invention introduces the combination of obtaining the requested information via either SMS or EMAIL. In other words, the subscriber will receive not just a notification to download the updated information, the invention provides that the notification (SMS/EMAIL) will include all the updated information.

### DETAILED DESCRIPTION OF THE PREFERRED EMBODIMENTS

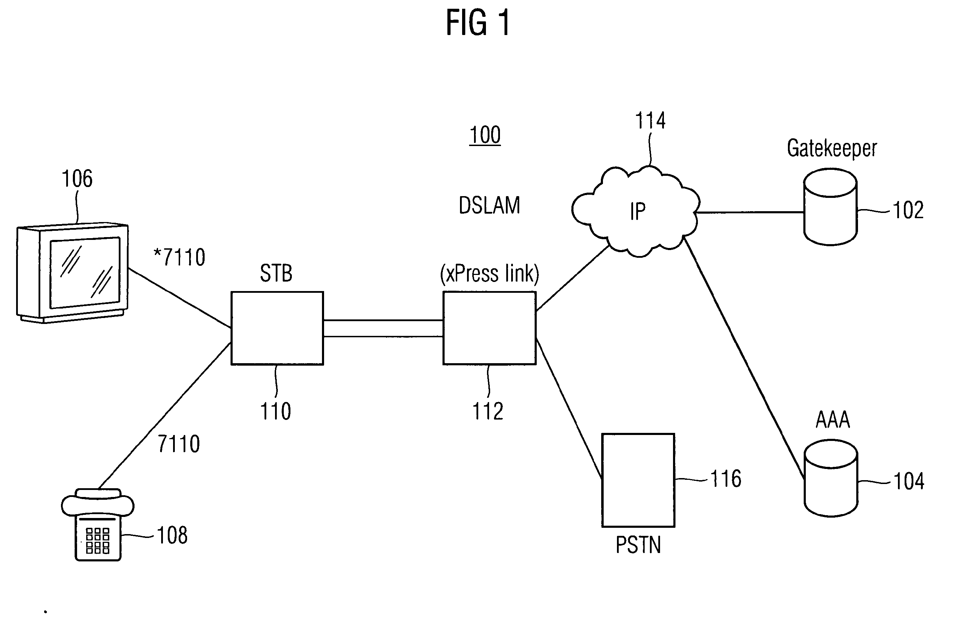

The present invention will be described with reference to Figure 1, wherein the inventive system is described. The proposed solution provides the means and method to being teletext to the Video telephony IP solution. By introducing teletext as a new service and its firstly introduced enhancements (EMAIL and SMS option), the video telephony communication becomes more user-friendly and interactive, thereby re-invigorating interest in this valuable and yet-untapped market.

For the implementation of this invention, changes are made at both the video telephony device and the switching network to which the device is connected. As will be explained in more detail, the gatekeeper is reconfigured to be able to communicate with a Teletext server. In the other variants of the invention, the gatekeeper is reconfigured to communicate with either an SMS server (mobile network) or a mail server, or any combination of these three. Additionally, the interface with the video telephony device is adapted to cover the new functionality that will be provided. In the embodiment that follows, the gatekeeper is adapted to send variable text strings to the video telephone via information/facility messages. The device itself is adapted to translate this information to the correct display and additionally the menu is enhanced with the additional functionality, which is needed to handle the Teletext request from the served user.

Before continuing, a brief word on teletext is in order, although a complete description of this well-known technology will not be re-iterated here since those skilled in the art readily have access to teletext technology. Teletext is an information retrieval service normally provided by television broadcast companies. Teletext pages can be viewed on television sets with suitable decoders. They offer a range of text-based information, usually including national, international and sporting news, weather and TV schedules. Subtitle (or closed caption) information is also transmitted in the teletext signal.

Teletext is widely used across Europe, with every main television station having its own teletext service. In some commercial stations the teletext is also used as a publicity channel, advertising products such as travel destinations. Common teletext services include TV schedules, regularly updated current affairs and sport news, simple games (e.g., quizzes) and subtitling for deaf people or in different languages.

The teletext signal is transmitted as part of the ordinary analogue TV signal but concealed from view in the VBI (vertical blanking interval). The teletext signal is digitally coded as 45-byte packets at the end of each scan line (only lines 6 - 22 and 318 - 335 are used) at about 600bps. Each page is comprised of one or more frames, each containing a screen-full of text. The pages are sent out one after the other in a continual loop. When the user requests a particular page the decoder simply waits for that page to be sent, and then captures it for display. In order to keep the delays short, enough to not be too bothersome, services typically only include a few hundred frames in total.

The original standard was developed in Britain and supported 24 rows of information with 40 characters a row. The standard was improved in 1976 to allow for improved appearance and color support. The proposed high resolution Level 2 (1981) was not adopted in Britain, although transmission rates were doubled from two to four lines a frame in 1981. The service extended to British commercial television through Teletext Ltd. Again, as an early adopter, Britain also rejected Level 2.5 (HighText). The text can be displayed instead of the television image (but standard with the sound), or through it.

Another teletext system uses a modem and the phone system to transmit and receive the data. The modem was asymmetric, with data sent at 75bps, and received 1200bps. This two-way nature allows pages to be served on request, in contrast to the TV-based systems' sequential rolling method. Digital television introduced "digital teletext", which despite the previous teletext standard's digital nature is actually has entirely different standards, such as MHEG-5 and Multimedia Home Platform.

As previously indicated, nowhere has it been provided to link teletext to video telephony. The inventive step is that for first time the Teletext feature is introduced as far as the Videotelephony IP solution is concerned. Another significant point is that the proposed Teletext enhancements (SMS/EMAIL) will allow the end-users to handle efficiently the provided service. Such enhancements were never implemented up to now.

The service "Teletext" will be introduced as a new service for the IP based solution "Videotelephony". Another feature that has not been implemented up to now. This will allow the Videotelephony end-users to inform themselves about several topics, such as news, sport, financial information, entertainment listings, holiday adverts, cinema, music and TV reviews, back-up information for certain TV programs, and themed magazines.

Now with respect to Figure 1, there is shown the system 100 of the present invention. Although any communication standard can be used, the figure shows a network set up in accordance with a packet based network, using namely the H.323 standard. In brief, the H.323 standard is a cornerstone technology for the transmission of real-time audio, video, and data communications over packet-based networks. It specifies the components, protocols, and procedures providing multimedia communication over packet-based networks. An H.323 network is a collection of terminals, gateways, and MCUs managed by a gatekeeper.

The gatekeeper 102 performs the registration and routing functionality to H.323 clients and H.323 networks. A gatekeeper can be considered the brain of the H.323 network. It is the focal point for all calls within the H.323 network. Although they are not required, gatekeepers provide important services such as addressing, authorization and authentication of terminals and gateways; bandwidth management; accounting; billing; and charging. Gatekeepers may also provide call-routing services.

H.323 gatekeepers are also responsible for admission control. This means that the gatekeeper keeps track of all the gateways in its domain and they ask its permission before placing a call. The gatekeeper usually permits or denies a call based on the number of calls or the bandwidth required. For this, there is provided an authorization and authentication access (AAA) database 104.

Now returning to Figure 1, the present invention basically sets up a communication session between two subscribers via the H.323 network comprising signaling traffic, voice data traffic and video data traffic. At least one of these subscribers is shown having a television TV or video capable monitor 106 and a telephone 108 connected to a Set Top Box (STB) 110. The Set Top Box (STB) 110 uses the Digital Subscriber Line (DSL) 112 to connect to the IP network 114. The Video Telephony subscribers are connected to the IP network 112 via DSL (Digital Subscriber Line) 114 access points which may be hardware clients (Set Top Box, STB) or software clients (PC). The line is terminated at the DSL-Modem, located at the subscriber's home. The DSL 112 may also be connected to a public switched telephone network (PSTN) 116.

The Set Top Box 110 connected to the TV 106 set terminates the Internet Protocol (IP). The Set Top Box 110 has the capability to encode voice and video signals for being transported via IP, and of course to decode audio/video signals to be displayed on the local TV. Although the STB is shown here in this embodiment, any type of terminating device may be utilized that has the capability to encode and decode voice and video signals, such as a video encoder/decoder.

Prior to setting up a call or receiving a video call, users are registered within the Gatekeeper 102 and updated on the AAA database 104. H.323 signaling will be initiated or terminated at the Set Top Box (STB) 110 and will be rerouted via the IP network 114 to the Gatekeeper 102. The Gatekeeper 102 performs the address resolution and provides the IP address of the called user to the calling user.

A possible calling procedure using the foregoing arrangement will now be described. The calling user dials a special code on the telephone 108, for example, "*7110" followed by the E.164 address of the called user, thus indicating to the Set Top Box (STB) 110 that he/se wants to initiate a video call. The called user is alerted and is presented a voice call (based on IP and H.323). If the called user indicates acceptance of the calling user to the conference, by pressing a special activating key, such as the "*" button, the user is added to the voice session, otherwise the session remains a pure voice session. In case the calling user dials now "7110" (without asterisk * before the DN of the B subscriber), thus indicating to the Set Top Box (STB) 110 that he/se wants to initiate a pure voice call then the call is routed to the PSTN side.

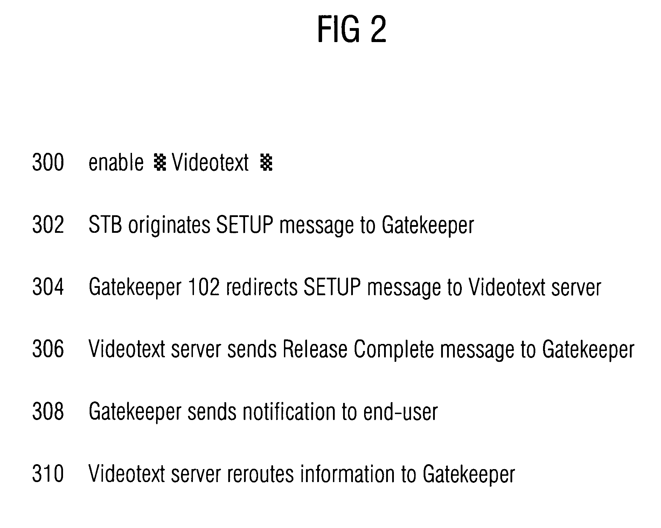

Now, the process for establishing teletext over video telephony shall now be described with reference to Figure 2. By typing the above last parameter in step 200 the subscriber has enabled online the "Videotext" service concerning the subject he is interested in. Now that the service is activated, the Set Top Box (STB) 110 originates a SETUP message to the Gatekeeper 102 in step 202. An address translation rule is pre-established in the gatekeeper 102 that causes the Gatekeeper 102 will redirect the SETUP message to the Videotext server where the Videotext information are stored in step 204.

The Videotext server, in turn, sends a Release Complete message to the Gatekeeper 102 in step 206 and the Gatekeeper 102 sends a notification to the end-user that the service is activated in step 208. The Videotext server reroutes the information to the gatekeeper in step 210. In the case of forwarding the text to a mobile phone or a computer, the Videotext server reroutes the information either to a mail server or the sms Gateway, depending on the kind of service the served user chose on his/her previous steps. This SETUP message includes the served users E.164 number, as well as, in the case of mobile phone connection or email service, the email address or the sms number the served user typed.

In this manner, the present invention couples the teletext to the IP packet based network. The Videotext server can additionally evaluate the received SETUP for charging purposes. After this, the operator converts the collected accounting statistics (start time, end time, total call duration) to currency/units, via its post processing system.

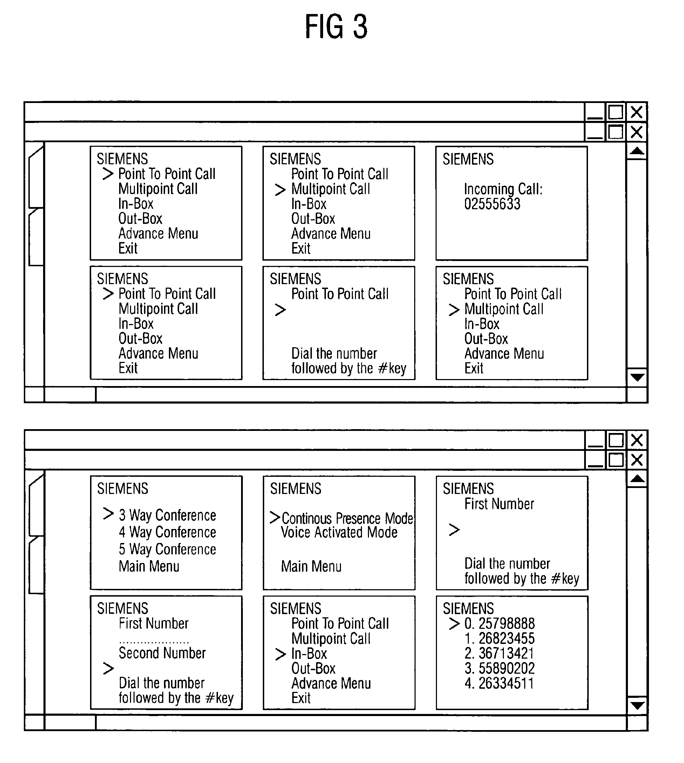

The invention also provides modification of the menu service offered to the user. In one aspect, the On Line Screen menu provided normally by the STB 110 is modified as shown in Figure 3.

The Teletext menu will have three additional options. The first one will enable the served user to choose if he/she wants to receive the information, he/she is interested in, via SMS or EMAIL. The necessity of a second option comes, because somehow the subscriber must specify how often he/she wants to receive the updated information of the topic he chose on the previous step. The last option that the subscriber must fill, is the email address or the mobile phone number he/she wants to be reached.

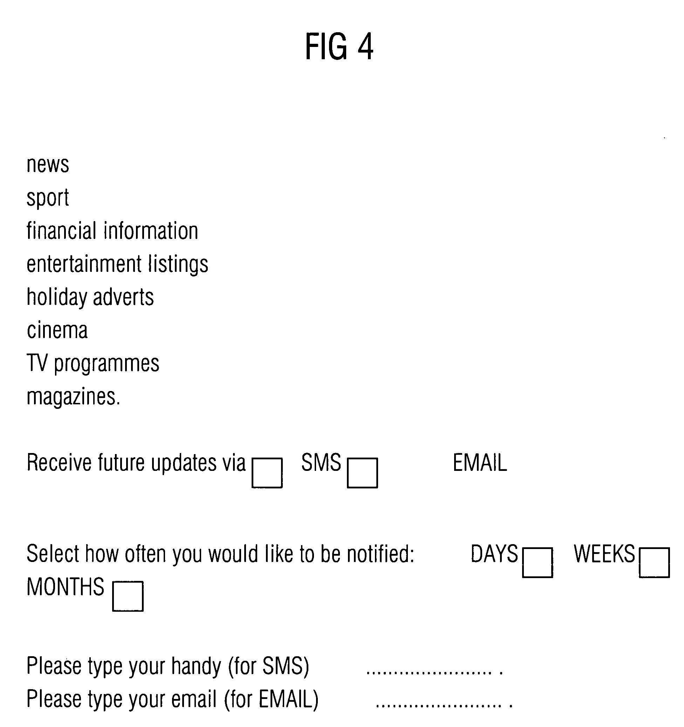

In trials performed in-house, results showed that even someone who has never heard anything about the Video Telephony could handle the OSD menu quite easily. As an example, one of the printed options of the OSD menu is shown in Figure 4A. By entering this option the following options are printed on the screen shown in the figure. The subscriber must now select one of the above options (e.g. cinema). Afterwards, a new Videotext page will be printed on the screen, with all the requested information. Additional on this page there will be two more options shown in Fig. 4B. Here it is shown that the user has an option to receive future updates and how often to be notified. By selecting either SMS or email then on the screen will be printed the following fields in Fig. 4C which asks the user to specify either the sms number or the email address.

With the present solution Videotelephony will be enhanced with a new teletext service and its add on features (SMS, EMAIL). "Videotext" is now not possible over a telephone network. The invention introduces exactly such a possibility. The operator will now have the ability to offer to its customers the "Videotext" service. The customers will be able to register to the service concerning the subject they are interested in and be notified via EMAIL or SMS, depending how frequent they wish to receive the updated information. It shall be appreciated that the embodiments described here are merely by example and that other variations and modifications are possible within the scope of the invention.

## Claims

1. A method for establishing teletext for a video telephony conference between subscribers conferencing over a telecommunications network whose communications are controlled by a Gatekeeper, a video encoder/decoder encodes and decodes audio/video signals to provide the video telephony to at least one subscriber, and a video text server provides teletext signals representing teletext to be established in the video telephony conference, comprising the steps of:
originating by the video encoder/decoder a SETUP message to the Gatekeeper;
inserting an address translation rule in the Gatekeeper that causes the Gatekeeper to redirect the SETUP message to the video text server;
sending by the videotext server a Release Complete message to the Gatekeeper; and
rerouting the teletext from the video text server the teletext signals representing the teletext to the Gatekeeper.

2. The method according to claim 1, further comprising the step of sending by the Gatekeeper the teletext signals to the video encoder/decoder.

3. The method according to claim 1, further comprising the step of sending by the Gatekeeper a notification to the end-user that the service is activated.

4. The method according to claim 1, further comprising the step of including in the SETUP message an E.164 number of the at least one subscriber that receives the video telephony.

5. The method according to claim 1, further comprising the step of selecting by the user the teletext for video telephony option a service representing delivery of content media to the at least one subscriber.

6. The method according to claim 5, further comprising the step of providing the at least one subscriber with an interface on the video encoder/decoder that allows the at least one subscriber to select a type of content media to be received.

7. The method according to claim 6, further comprising the step of including in the SETUP message the email address of the at least one subscriber that receives the video telephony and redirecting the content media to the email address.

8. The method according to claim 6, further comprising the step of including in the SETUP message a short message service (sms) number of the at least one subscriber that receives the video telephony.

9. The method according to claim 6, wherein the content media is one of the group consisting of news, sports, financial information, entertainment listings, holiday adverts, cinema, music, TV reviews, back-up information for TV programs, and themed magazines.

10. A system for establishing teletext for a video telephony conference between subscribers conferencing over a telecommunications network, comprising:
a Gatekeeper for controlling communications of the telecommunications network;
a video encoder/decoder encodes and decodes audio/video signals to provide video telephony to at least one subscriber;
a video text server provides teletext signals representing teletext to be established in the video telephony conference;
wherein the video encoder/decoder originates a SETUP message to the Gatekeeper;
wherein the Gatekeeper includes address translation rule that causes the Gatekeeper to redirect the SETUP message to the video text server;
wherein the videotext server sends a Release Complete message to the Gatekeeper; and
wherein the teletext signals representing the teletext are rerouted from the video text server to the Gatekeeper.

11. The system according to claim 10, wherein the Gatekeeper the teletext signals to the video encoder/decoder.

12. The system according to claim 10, wherein the video encoder/decoder is a STB.

13. The system according to claim 10, further comprising a digital subscriber line (DSL) for connecting the video encoder/decoder to the Gatekeeper.

14. The system according to claim 10, wherein the at least one subscriber selects the teletext for video telephony option as a service representing delivery of content media to the at least one subscriber.

15. The system according to claim 14, further comprising a user interface on the video encoder/decoder that allows the at least one subscriber to select a type of content media to be received.

16. The system according to claim 15, wherein the video/encoder decoder includes in the SETUP message the email address of the at least one subscriber that receives the video telephony and redirecting the content media to the email address.

17. The system according to claim 15, wherein the video/encoder decoder includes in the SETUP message an short message service (sms) number of the at least one subscriber that receives the video telephony.

18. The system according to claim 15, wherein the content media is one of the group consisting of news, sports, financial information, entertainment listings, holiday adverts, cinema, music, TV reviews, back-up information for TV programs, and themed magazines.
